# EUROPÄISCHE PATENTSCHRIFT

(11) **EP 3 577 366 B1**
(45) Veröffentlichungstag und Bekanntmachung des Hinweises auf die Patenterteilung: **28.09.2022**
(21) Anmeldenummer: 18704915.0
(22) Anmeldetag: 01.02.2018
(51) Int. Cl.: F16F 1/04, F16F 1/48

(54) **DREHFEDER MIT UNTERSCHLIEDLICHEN WINDUNGSDURCHMESSERN**
TORSION SPRING WITH DIFFERENT DIAMETER
RESSORT DE TORSION AVEC DIAMETRES DIFFERENTS

(30) Priorität: 02.02.2017 DE 102017102022
(43) Veröffentlichungstag der Anmeldung: 11.12.2019
(73) Patentinhaber: Scherdel Innotec Forschungs- Und Entwicklungs GmbH, 95615 Marktredwitz (DE)
(72) Erfinder: REINTSCH, Christoph, 92699 Bechtsrieth (DE)
(74) Vertreter: Schmitt-Nilson Schraud Waibel Wohlfrom Patentanwälte Partnerschaft mbB
(86) Internationale Anmeldenummer: PCT/EP2018/052513
(87) Internationale Veröffentlichungsnummer: WO 2018/141845

(56) Entgegenhaltungen:
- JP-A- H02 209 636
- US-A1- 2011 266 730
- US-B1- 6 220 586

## Beschreibung

Die vorliegende Erfindung betrifft eine Drehfeder mit unterschiedlichen Windungsdurchmessern.

Drehfedern, die auch Torsionsfedern genannt und auf Drehung bzw. Torsion belastet werden, kommen in vielen Anwendungsfeldern zum Einsatz, z.B. im Antriebsstrang von Kraftfahrzeugen.

Wenn solche Drehfedern durch ihren Betrieb dynamisch belastet werden, ergeben sich häufig große Schwingungen, was unerwünscht ist, die Federwirkung beeinträchtigt und im schlimmsten Fall zu einem erhöhten Verschleiß und sogar zu einem Bruch der Drehfeder führen kann.

Aus der EP 1 628 035 A1 ist ein Drehfederelement mit einer balligen, sinusoiden, kegeligen oder doppelkegeligen Form bekannt. Ein solches Drehfederelement benötigt in Radialrichtung gesehen einen recht großen Bauraum, und neigt ebenfalls zu unerwünscht großen Schwingungen bei dynamischer Belastung.

Die US 2011/266730 A1 zeigt eine Feder, insbesondere für eine Verriegelungsvorrichtung eines Fahrzeugsitzes, die als eine Schenkelfeder, welche eine Achse definiert, aus einem Federdraht, dessen Querschnitt einen Querschnittsdurchmesser aufweist, ausgebildet ist, mit je einem Schenkel an den beiden Enden des Federdrahtes, wobei die beiden Schenkel relativ zueinander in Umfangsrichtung der Achse schwenkbar sind und dabei die Feder von einem entspannten Zustand in einen gespannten Zustand überführen, mit wenigstens einer ersten Windung zwischen den Schenkeln, welche mit einem Windungsdurchmesser im entspannten Zustand vollständig um eine Achse herum gewickelt ist, und mit wenigstens einer benachbarten zweiten Windung zwischen den Schenkeln, welche im entspannten Zustand um eine Steigung entlang der Achse versetzt angeordnet ist und welche mit einem Windungsdurchmesser im entspannten Zustand gegebenenfalls unvollständig um die Achse herum gewickelt ist, dadurch gekennzeichnet, dass die Steigung im entspannten Zustand kleiner ist als der Querschnittsdurchmesser.

Es ist daher Aufgabe der vorliegenden Erfindung, eine Drehfeder bereitzustellen, die ein verbessertes dynamisches Verhalten, insbesondere weniger groß ausgebildete Schwingungen bei dynamischer Belastung, hat und eine hohe Haltbarkeit aufweist. Des Weiteren soll eine solche Drehfeder ein gutes dynamisches Verhalten bei geringer statischer Hysterese haben.

Diese Aufgabe wird durch den Gegenstand der unabhängigen Patentansprüche gelöst. Vorteilhafte Weiterbildungen ergeben sich aus den abhängigen Ansprüchen.

Eine erfindungsgemäße Drehfeder weist Folgendes auf: einen gewundenen Federdraht mit mehreren Federwindungen; sowie ein erstes Federdrahtende und ein zweites Federdrahtende; wobei die Drehfeder zur Aufnahme einer Drehkraft und/oder eines Drehmoments bei einer auf die Federdrahtenden einwirkenden Winkel-/Drehbewegung ausgebildet ist; und wobei die Federwindungen wenigstens einen Federwindungsbereich mit einem Windungsdurchmesser-Verlauf aufweisen, mit einem ersten Abschnitt, in dem der Windungsdurchmesser entlang eines ersten Winkelbereichs ein erster, größerer Windungsdurchmesser ist; mit einem zweiten Abschnitt, in dem danach der Windungsdurchmesser entlang eines zweiten Winkelbereichs von dem ersten, größeren Windungsdurchmesser zu einem zweiten, kleineren Windungsdurchmesser abnimmt; mit einem dritten Abschnitt, in dem danach der Windungsdurchmesser entlang eines dritten Winkelbereichs der zweite, kleinere Windungsdurchmesser ist, mit einem vierten Abschnitt, in dem danach der Windungsdurchmesser entlang eines vierten Winkelbereichs von dem zweiten, kleineren Windungsdurchmesser zu dem ersten, größeren Windungsdurchmesser zunimmt.

Mit einer erfindungsgemäßen Drehfeder sind die Schwingungen bei einer dynamischen Belastung deutlich reduziert. Die erfindungsgemäße Drehfeder zeigt daher ein deutlich verbessertes dynamisches Verhalten und bietet gute Dämpfungseigenschaften.

Ganz besonders die großen Resonanzschwingungen, die bei herkömmlichen Drehfedern dann auftreten, wenn diese im Bereich ihrer Eigenfrequenz angeregt werden, sind auf ein Minimum reduziert oder werden sogar ganz vermieden. Dies verhindert einen hohen Verschleiß und einen Bruch der Drehfeder.

Die Schwingungsamplitude im kritischen Anregungs- und Schwingungsbereich ist bei der erfindungsgemäßen Drehfeder reduziert, was ihre Lebensdauer erhöht.

Durch den erfindungsgemäßen Windungsdurchmesser-Verlauf mit vier Winkelbereichs-Abschnitten mit unterschiedlicher Windungsdurchmesser-Beschaffenheit erfolgt eine federinterne Abstützung der Windungen. Diese Abstützung sorgt beim Auftreten von Drehschwingungen zu einer Eigendämpfung der Drehfeder.

Dabei wird zusätzlich die Abhängigkeit der Eigenfrequenz vom WindungsDurchmesser genutzt. Dies bedeutet, dass die vier Winkelbereichs-Abschnitte mit unterschiedlicher Windungsdurchmesser-Beschaffenheit, jeweils für sich genommen, eine unterschiedliche Eigenfrequenz aufweisen, und dass somit, wenn sich einer der vier Winkelbereichs-Abschnitte in Schwingung mit seiner Eigenfrequenz befindet, eine Abstützung über die jeweils anderen Winkelbereichs-Abschnitte, die nicht mit ihrer Eigenfrequenz schwingen, erfolgt.

Wenn jeweils benachbarte Federwindungen aneinander anliegen, führt dieser Windungskontakt zu einer Reibung zwischen den jemals aneinander anliegenden Federwindungen, was zusätzlich zu einer Dämpfung der gesamten Drehfeder beiträgt.

Zudem sorgt die Hysterese für eine Dämpfung der Feder im dynamischen Anregung Bereich. Die statische Hysterese steigt durch den erfindungsgemäßen Federkörper mit den vier Federwindungs-Abschnitten mit unterschiedlicher Windungsdurchmesser-Beschaffenheit nur geringfügig an.

Durch die erfindungsgemäße Drehfeder wird eine Eigendämpfung erreicht, ohne dass hierfür zusätzliche Bauteile erforderlich sind.

Der Bauraum, den die erfindungsgemäße Drehfeder einnimmt, ist im Vergleich zu einer herkömmlichen Drehfeder mit konstantem Windungsdurchmesser gering und wird durch den Windungsdurchmesser im ersten Abschnitt, in dem der Windungsdurchmesser der erste, größere Windungsdurchmesser ist, bestimmt.

Die erfindungsgemäße Drehfeder mit dem Windungsdurchmesser-Verlauf mit vier Windungsdurchmesser-Abschnitten jeweils unterschiedlicher Windungsdurchmesser-Beschaffenheit ist einfach und kostengünstig herstellbar.

Die erfindungsgemäße Drehfeder ist so ausgebildet, dass im ungespannten Zustand der Drehfeder jeweils benachbarte Windungen in einem axialen Abstand zueinander angeordnet sind; und dass im gespannten Zustand der Drehfeder jeweils benachbarte Windungen aneinander anliegen. Das Anliegen von benachbarten Federwindungen verbessert das Dämpfungsverhalten der Drehfeder durch die gegenseitige Abstützung der Federabschnitte. Eine solche Drehfeder ist für einen vorgespannten Einbau bestimmt. Erst in der Einbausituation liegen jeweils benachbarte Windungen der Drehfeder aneinander an und tragen über die dadurch entstehende Reibung zu der Dämpfung der Drehfeder bei.

Im ungespannten Zustand der Drehfeder können jeweils benachbarten Windungen auch ohne axialen Abstand ausgebildet sein, also aneinander anliegen. Der Kontakt könnte auch durch eine Anregung oder Schwingung zustande kommen.

Gemäß einer Ausführungsform ist der zweite, kleinere Windungsdurchmesser um einen Betrag kleiner als der erste, größere Windungsdurchmesser, der höchstens das Dreifache des Federdrahtdurchmessers beträgt. Dadurch ist ein Anliegen benachbarter Federwindungen gewährleistet.

Gemäß einer weiteren Ausführungsform nimmt der erste Abschnitt des Windungsdurchmesser-Verlaufs des wenigstens einen Federwindungsbereichs, in dem der Windungsdurchmesser der erste, größere Windungsdurchmesser ist, einen Winkelbereich von 90° bis 1800° ein.

Gemäß einer weiteren Ausführungsform nimmt der dritte Abschnitt des Windungsdurchmesser-Verlaufs des wenigstens einen Federwindungsbereichs, in dem der Windungsdurchmesser der zweite, kleinere Windungsdurchmesser ist, einen Winkelbereich von 90° bis 1800° ein.

Die Winkelbereiche für den ersten, größeren Windungsdurchmesser-Abschnitt und für den zweiten, kleineren Windungsdurchmesser-Abschnitt können daher individuell auf die jeweilige Anwendungssituation angepasst werden. Sie können zwischen einer Viertelwindung und fünf Vollwindungen betragen.

Gemäß einer weiteren Ausführungsform nehmen der erste Abschnitt und der dritte Abschnitt des Windungsdurchmesser-Verlaufs jeweils gleich große Winkelbereiche ein.

Gemäß einer weiteren Ausführungsform nimmt der zweite Abschnitt des Windungsdurchmesser-Verlaufs des wenigstens einen Federwindungsbereichs, in dem der Windungsdurchmesser von dem ersten, größeren Windungsdurchmesser zu einem zweiten, kleineren Windungsdurchmesser abnimmt, einen Winkelbereich von 45° bis 360°, insbesondere etwa 180°, ein.

Gemäß einer weiteren Ausführungsform nimmt der vierte Abschnitt des Windungsdurchmesser-Verlaufs des wenigstens einen Federwindungsbereichs, in dem der Windungsdurchmesser von dem zweiten, kleineren Windungsdurchmesser zu dem ersten, größeren Windungsdurchmesser zunimmt, einen Winkelbereich von 45° bis 360°, insbesondere etwa 180°, ein.

Auch die Winkelbereiche des zweiten und vierten Windungsdurchmesser-Abschnitts können individuell auf die jeweilige Anwendungssituationen angepasst werden. Sie können zwischen einer Untergrenze, die bei einer Achtelwindung liegt und einer Obergrenze, die bei einer Vollwindung liegt, betragen. Bevorzugt ist ein Winkelbereich von etwa 180°, also einer halben Windung.

Gemäß einer weiteren Ausführungsform nehmen der zweite Abschnitt und der vierte Abschnitt des Windungsdurchmesser-Verlaufs jeweils gleich große Winkelbereiche ein.

Gemäß einer weiteren Ausführungsform weisen die Federwindungen mehrere Federwindungsbereiche hintereinander auf, die jeweils einen Windungsdurchmesser-Verlauf aufweisen, mit einem ersten Abschnitt, in dem der Windungsdurchmesser entlang eines ersten Winkelbereichs ein erster, größerer Windungsdurchmesser ist; mit einem zweiten Abschnitt, in dem danach der Windungsdurchmesser entlang eines zweiten Winkelbereichs von dem ersten, größeren Windungsdurchmesser zu einem zweiten, kleineren Windungsdurchmesser abnimmt; mit einem dritten Abschnitt, in dem danach der Windungsdurchmesser entlang eines dritten Winkelbereichs der zweite, kleinere Windungsdurchmesser ist, mit einem vierten Abschnitt, in dem danach der Windungsdurchmesser entlang eines vierten Winkelbereichs von dem zweiten, kleineren Windungsdurchmesser zu dem ersten, größeren Windungsdurchmesser zunimmt, wobei Abschnitte jeweils benachbarter Federwindungen, in denen der Windungsdurchmesser vom zweiten, kleineren Windungsdurchmesser zum ersten, größeren Windungsdurchmesser übergeht, aneinander anliegen und/oder Abschnitte jeweils benachbarter Federwindungen, in denen der Windungsdurchmesser vom ersten, größeren Windungsdurchmesser zum zweiten, kleineren Windungsdurchmesser übergeht, aneinander anliegen.

Bei dieser Ausführungsform ergibt sich eine Drehfeder mit einem sich wiederholenden Verlauf der vier Windungsdurchmesser-Abschnitte. Eine solche Drehfeder weist ein besonders günstiges dynamisches Verhalten und eine besonders gute Dämpfung auf.

Gemäß einer weiteren Ausführungsform sind vor dem ersten Federwindungsbereich ein Anfangsabschnitt, in dem der Windungsdurchmesser entlang eines Winkelbereichs der zweite, kleinere Windungsdurchmesser ist, und ein Übergangsabschnitt vorgesehen, in dem danach der Windungsdurchmesser entlang eines Winkelbereichs von dem zweiten, kleineren Windungsdurchmesser zu dem ersten, größeren Windungsdurchmesser zunimmt; und wobei der erste Abschnitt des ersten Federwindungsbereichs an den Übergangsabschnitt anschließt.

Gemäß einer weiteren Ausführungsform ist vor dem ersten Federwindungsbereich ein Anfangsabschnitt vorgesehen, in dem der Windungsdurchmesser entlang eines Winkelbereichs von dem zweiten, kleineren Windungsdurchmesser zu dem ersten, größeren Windungsdurchmesser zunimmt; und wobei der erste Abschnitt des ersten Federwindungsbereichs an den Anfangsabschnitt anschließt.

Gemäß einer weiteren Ausführungsform sind vor dem ersten Federwindungsbereich ein Anfangsabschnitt, in dem der Windungsdurchmesser entlang eines Winkelbereichs von dem ersten, größeren Windungsdurchmesser zu einem zweiten, kleineren Windungsdurchmesser abnimmt, ein erster Übergangsabschnitt, in dem der Windungsdurchmesser entlang eines Winkelbereichs der zweite, kleinere Windungsdurchmesser ist, und ein zweiter Übergangsabschnitt vorgesehen, in dem danach der Windungsdurchmesser entlang eines Winkelbereichs von dem zweiten, kleineren Windungsdurchmesser zu dem ersten, größeren Windungsdurchmesser zunimmt; und wobei der erste Abschnitt des ersten Federwindungsbereichs an den zweiten Übergangsabschnitt anschließt.

Durch solche Anfangsabschnitte können das erste und das zweite Federende auf die jeweils gewünschte Weise an den ersten Windungsdurchmesser-Abschnitt des Windungsdurchmesser-Verlaufs der Drehfeder angebunden werden.

Gemäß einer weiteren Ausführungsform ist die Drehfeder für eine schließende Belastung in Wickelrichtung ausgebildet; und/oder das erste Federdrahtende ist als von der obersten Federwindung weg gebogenes, insbesondere nach außen gebogenes Federdrahtende ausgebildet; und/oder das zweite Federdrahtende ist als von der untersten Federwindung weg gebogenes, insbesondere nach außen gebogenes Federdrahtende ausgebildet.

Bei einer für eine schließende Belastung in Wickelrichtung ausgebildeten Drehfeder können die Federdrahtenden auch nach innen oder zu einer Öse gebogen sein. Sie können auch spezielle Schenkelformen haben.

Gemäß einer weiteren Ausführungsform ist die Drehfeder für eine öffnende Belastung gegen die Wickelrichtung ausgebildet ist; und/oder das erste Federdrahtende weist eine erste, sich insbesondere in Wickelrichtung erstreckende Stirnfläche auf; und das zweite Federdrahtende weist eine zweite, sich insbesondere in Wickelrichtung erstreckende Stirnfläche auf; wobei die erste und die zweite Stirnfläche zur Einleitung der Drehkraft und/oder des Drehmoments bei einer auf die Federdrahtenden einwirkenden Winkel-/Drehbewegung ausgebildet sind. Die Federdrahtenden einer für eine öffnende Belastung gegen die Wickelrichtung ausgebildeten Drehfeder können auch eine andere Gestalt haben.

Gemäß einer weiteren Ausführungsform schließen das erste Federdrahtende und das zweite Federdrahtende im ungespannten Zustand der Drehfeder einen Spannwinkel in Umfangsrichtung der Drehfeder ein.

Gemäß einer weiteren Ausführungsform weist der Federdraht einen runden oder ovalen Querschnitt auf. Alternativ dazu kann der Federdraht auch einen anderen Querschnitt aufweisen, zum Beispiel einen rechteckigen, einen elliptischen oder einen Multi-Arc Querschnitt.

Die Erfindung wird im Folgenden anhand von Ausführungsbeispielen unter Bezugnahme auf die beiliegenden Figuren näher erläutert.
Fig. 1 zeigt eine Drehfeder gemäß einem ersten Ausführungsbeispiel in einer schematischen perspektivischen Darstellung.
Fig. 2 zeigt die Drehfeder gemäß dem ersten Ausführungsbeispiel in einer schematischen Draufsicht.
Fig. 3a bis 3e zeigen die Drehfeder gemäß dem ersten Ausführungsbeispiel in einer Draufsicht (Fig. 3a), in einer Seitenansicht (Fig. 3b), in einer Vorderansicht (Fig. 3c), in einer Schnittansicht in einer Schnittebene A-A (Fig. 3d), und in einer Schnittansicht in einer Schnittebene B-B (Fig. 3e).
Fig. 4 zeigt die Drehfeder gemäß dem ersten Ausführungsbeispiel in einer Draufsicht, in einer Schnittansicht in einer Schnittebene A-A, in einer Schnittansicht in einer Schnittebene B-B, und ein Diagramm des Durchmesserverlaufes über die Windungen;
Fig. 5a bis 5d zeigen eine Drehfeder gemäß einem zweiten Ausführungsbeispiel in einer schematischen Schnittansicht (Fig. 5a), eine Drehfeder gemäß einem dritten Ausführungsbeispiel in einer schematischen Schnittansicht (Fig. 5b), eine Drehfeder gemäß einem vierten Ausführungsbeispiel in einer schematischen Schnittansicht (Fig. 5c), und ein Diagramm des Durchmesserverlaufes über die Windungen zu den Drehfedern des zweiten bis vierten Ausführungsbeispiels (Fig. 5d);
Fig. 6 zeigt die Drehfeder gemäß dem ersten Ausführungsbeispiel in einer schematischen Draufsicht mit Angabe von zwei Winkelstellungen des ersten Federdrahtendes;
Fig. 7 zeigt die Drehfeder gemäß dem ersten Ausführungsbeispiel in einer Draufsicht und einem Schnitt A-A mit Ausschnittsvergrößerungen für unterschiedliche Positionen des Federdrahtes entsprechend zwei unterschiedlichen Winkelstellungen des ersten Federdrahtendes; und
Fig. 8a bis 8d zeigen eine Drehfeder gemäß einem fünften Ausführungsbeispiel in einer schematischen perspektivischen Darstellung (Fig. 8a), in einer Seitenansicht (Fig. 8b), in einer Draufsicht (Fig. 8c) und in einer Vorderansicht (Fig. 8d).

In den Figuren bezeichnen dieselben Bezugszeichen gleiche oder funktionsgleiche Komponenten, soweit nichts Gegenteiliges angegeben ist.

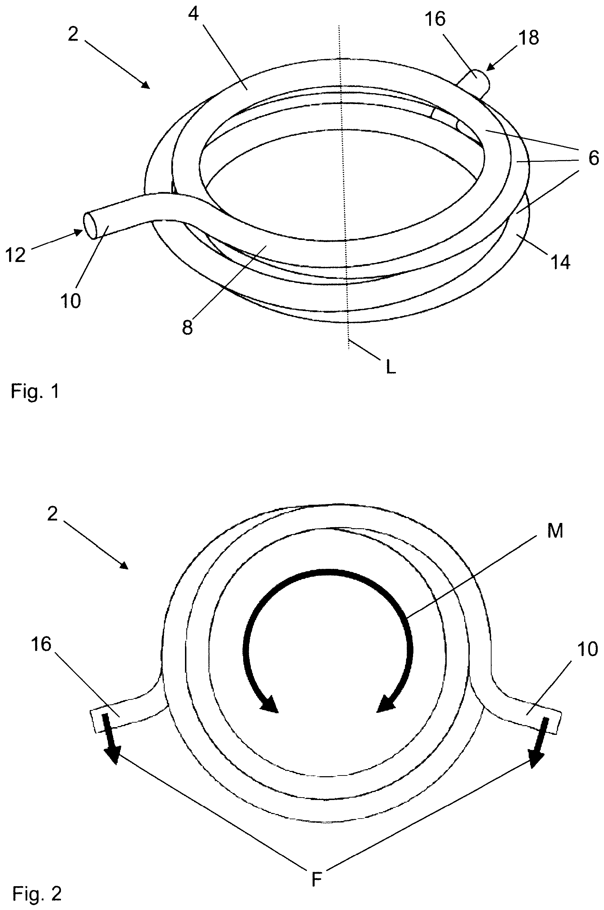

Fig. 1 zeigt eine Drehfeder 2 gemäß einem ersten Ausführungsbeispiel in einer schematischen perspektivischen Darstellung.

Die Drehfeder 2 ist aus Federdraht 4 hergestellt und weist mehrere Federwindungen 6 auf, die sich im Bild spiralförmig von unten nach oben um eine axiale Längsachse L der Drehfeder 2 herum erstrecken. Die Drehfeder 2 endet im Bild oben in einer obersten Federwindung 8 mit einem ersten Federdrahtende 10, das radial von der obersten Federwindung 8 nach außen gebogen ist. Kopfseitig ist am ersten Federdrahtende 10 eine erste Stirnfläche 12 ausgebildet. Die erste Stirnfläche 12 weist bei einem Federdraht 4 mit rundem Querschnitt je nach Neigung der Stirnfläche 12 zur Längserstreckungsrichtung des Federdrahtendes 10 eine runde Form auf. Eine unterste Federwindung 14 weist entsprechend ein zweites Federdrahtende 16 mit einer daran ausgebildeten, zweiten Stirnfläche 18 auf. Das zweite Federdrahtende 16 ist radial von der ringförmigen untersten Federwindung 14 nach außen gebogen.

Fig. 2 zeigt die Drehfeder 2 gemäß dem ersten Ausführungsbeispiel in einer Draufsicht als schematische Darstellung.

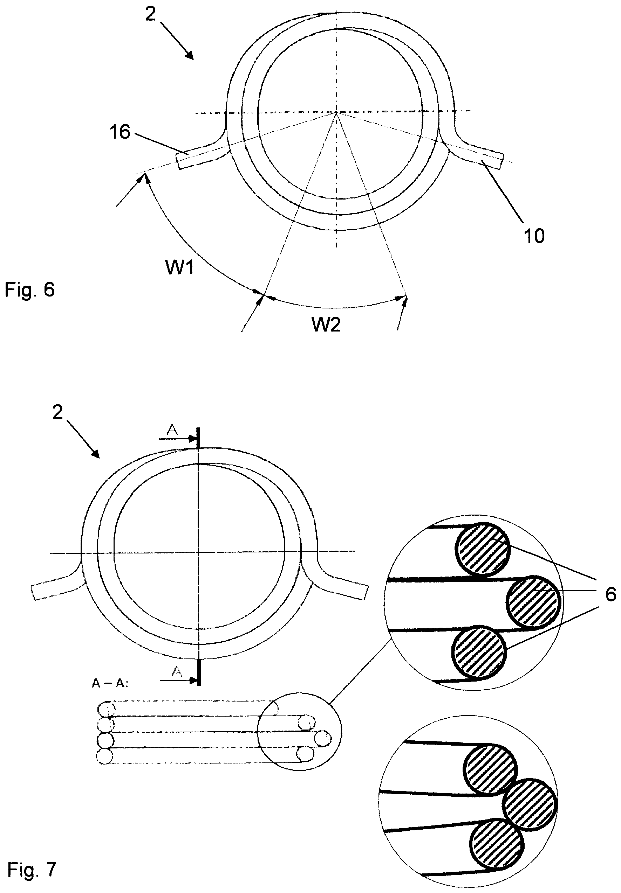

Durch Kräfte F an dem ersten Federdrahtende 10 und dem zweiten Federdrahtende 16 wird die Drehfeder 2 mit einem Drehmoment M um die Längsachse L herum beansprucht. Die Kräfte F sind als Pfeile und das daraus resultierende Drehmoment M als Ringdoppelpfeil dargestellt. Entsprechend dem Drehmoment M ergibt sich eine Verlagerung der Federdrahtenden 10, 16 in Umfangsrichtung aufeinander zu oder voneinander weg. Dies wird anhand von Verdrehwinkeln mit Bezug auf Fig. 6 weiter unten im Detail ausgeführt.

Die Drehfeder 2 ist für eine schließende Belastung ausgelegt. Die Einleitung der Drehkraft und des Drehmoments erfolgt über die Federdrahtenden 10 und 16. Die Belastung erfolgt somit in Wickelrichtung der Drehfeder 2.

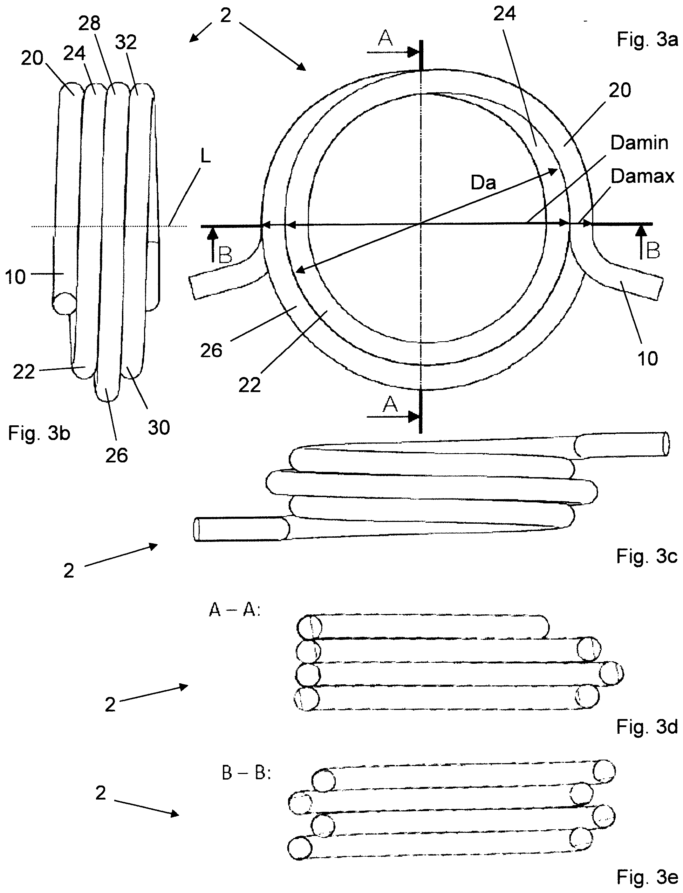

Fig. 3a bis 3e zeigen die Drehfeder 2 gemäß dem ersten Ausführungsbeispiel als Draufsicht (Fig. 3a), als Seitenansicht (Fig. 3b), als Vorderansicht (Fig. 3c), als Schnittansicht in einer Schnittebene A-A (Fig. 3d), und als Schnittansicht in einer Schnittebene B-B (Fig. 3e).

Die Schnittebenen A-A und B-B sind durch entsprechende Schnittebenenpfeile in Fig. 3a angegeben.

Im Folgenden wird der Aufbau der Drehfeder 2 im Einzelnen beschrieben. Das erste Federdrahtende 10 ist in Fig. 3a rechts im Bild etwas nach unten ragend dargestellt. Von dort startend wird die Drehfeder 2 den Windungen folgend beschrieben.

Gemäß dem ersten Ausführungsbeispiel ist anschließend an das erste Federdrahtende 10 ein Anfangsabschnitt 20 vorgesehen, in dem der Windungsdurchmesser Da zunächst entlang eines Winkelbereichs von einem ersten, größeren Windungsdurchmesser Damax zu einem zweiten, kleineren Windungsdurchmesser Damin abnimmt.

Bei diesem Ausführungsbeispiel verläuft der Anfangsabschnitt 20 als sich im Durchmesser verkleinernder Kreisbogen über einen Winkel von etwa 180° und ist in Figur 3b oberhalb der Schnittebene B-B angeordnet. Der Windungsdurchmesser Da wird als Außendurchmesser, also Durchmesser am Außenumfang der jeweiligen Windung 6 der Drehfeder 2, verstanden.

Es folgt bei diesem Ausführungsbeispiel ein erster Übergangsabschnitt 22, in dem der Windungsdurchmesser Da entlang eines Winkelbereichs der zweite, kleinere Windungsdurchmesser Damin ist. Bei diesem Ausführungsbeispiel verläuft der Übergangsabschnitt 22 über einen Winkel von etwa 180° und ist im Bild unterhalb der Schnittebene B-B angeordnet.

Es ist bei diesem Ausführungsbeispiel ein zweiter Übergangsabschnitt 24 anschließend an den ersten Übergangsabschnitt 22 vorgesehen, in dem danach der Windungsdurchmesser Da entlang eines Winkelbereichs von dem zweiten, kleineren Windungsdurchmesser Damin zu dem ersten, größeren Windungsdurchmesser Damax zunimmt. Bei diesem Ausführungsbeispiel verläuft der zweite Übergangsabschnitt 24 über einen Winkel von etwa 180° und ist im Bild oberhalb der Schnittebene B-B angeordnet.

Anschließend an den zweiten Übergangsabschnitt 24 folgt nun ein Windungsdurchmesser-Verlauf mit vier aufeinander folgenden Windungsdurchmesser-Abschnitten.

In einem erster Abschnitt 26 ist der Windungsdurchmesser Da entlang eines ersten Winkelbereichs der erste, größere Windungsdurchmesser Damax. Bei diesem Ausführungsbeispiel verläuft der erste Abschnitt 26 über einen Winkel von etwa 180° und ist im Bild unterhalb der Schnittebene B-B angeordnet. Die nachfolgend beschriebenen Federwindungen 6 liegen in Fig. 3a in der Bildebene verdeckt, d.h unter den bisher beschriebenen. Anhand der Fig. 3b bis Fig. 3e kann die Abfolge der Federwindungen 6 ab hier besser nachvollzogen werden.

An den ersten Abschnitt 26 schließt ein zweiter Abschnitt 28 an, in dem danach der Windungsdurchmesser Da entlang eines zweiten Winkelbereichs von dem ersten, größeren Windungsdurchmesser Damax zu dem zweiten, kleineren Windungsdurchmesser Damin abnimmt;

An den zweiten Abschnitt 28 schließt ein dritter Abschnitt 30 an, in dem danach der Windungsdurchmesser Da entlang eines dritten Winkelbereichs der zweite, kleinere Windungsdurchmesser Damin ist.

An den dritten Abschnitt 30 schließt ein vierter Abschnitt 32 an, in dem danach der Windungsdurchmesser Da entlang eines vierten Winkelbereichs von dem zweiten, kleineren Windungsdurchmesser Damin zu dem ersten, größeren Windungsdurchmesser Damax zunimmt.

Dieser Windungsdurchmesser-Verlauf der Drehfeder 2 beinhaltet in jeder der Federwindungen 6 einen Übergang des Windungsdurchmessers, zwischen dem ersten, größeren Windungsdurchmesser Damax und dem zweiten, kleineren Windungsdurchmesser Damin. Dazu sind die vier Abschnitte 26, 28, 30, 32 so aufeinander folgend vorgesehen, dass der Windungsdurchmesser Da im Wechsel abschnittsweise konstant bleibt und sich nachfolgend verkleinert bzw. vergrößert.

Durch den wechselnden Windungsdurchmesser Da wird die Schwingungserregbarkeit der Drehfeder 2 bei dynamischer Belastung verringert. Dies liegt einerseits an den unterschiedlichen Eigenfrequenzen der vier Windungsdurchmesser-Abschnitte. Ferner können die Federwindungen 6 auch aneinander zum Anliegen kommen, was zu einer gegenseitigen Abstützung benachbarter Federwindungen führt und das Dämpfungsverhalten der Drehfeder 2 weiter verbessert.

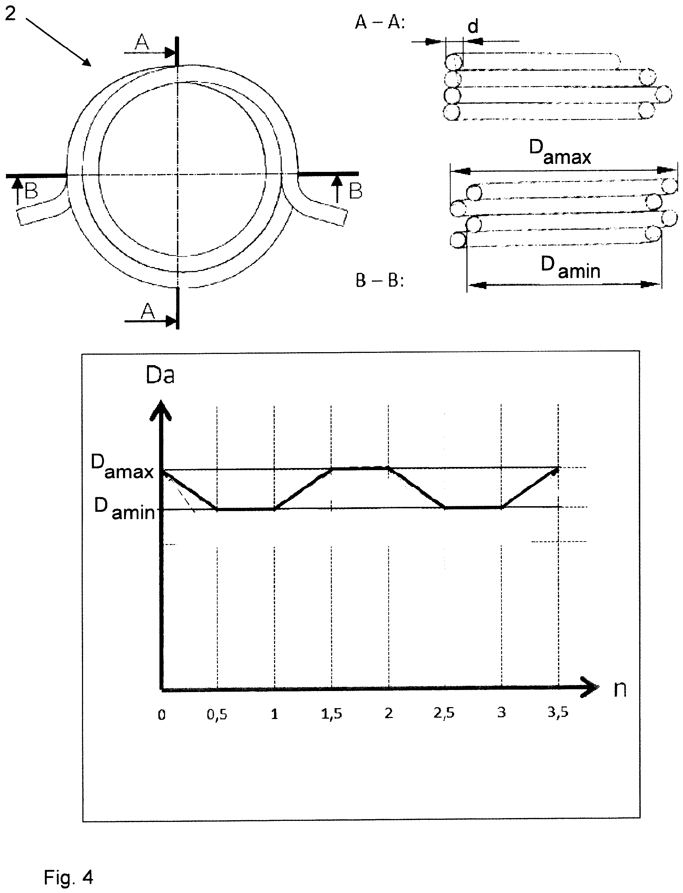

Fig. 4 zeigt die Drehfeder 2 gemäß dem ersten Ausführungsbeispiel in drei Ansichten, die den Fig. 3a, Fig. 3d und Fig. 3e entsprechen, und unten ein Diagramm des Durchmesserverlaufes Da über Anzahl n der Windungen 6.

Die drei Ansichten der Drehfeder 2 sind hier lediglich für eine leichtere Verständlichkeit des Durchmesserverlaufs-Diagramms noch einmal dargestellt. Zusätzlich sind hier der Drahtdurchmesser d des Federdrahtes 4 im Schnitt A-A, der erste, größere Windungsdurchmesser Damax und der zweite, kleinere Windungsdurchmesser Damin im Schnitt B-B gezeigt.

Das Diagramm zeigt den Verlauf des Windungsdurchmessers Da, aufgetragen über die Windungszahl n. Auf der horizontalen Achse ist dafür die Windungszahl n in Schritten von 0,5 n aufgetragen. Auf der vertikalen Achse ist der Windungsdurchmesser Da aufgetragen. Markiert sind hierbei die Werte Damin als Minimalwert und Damax als Maximalwert für den Windungsdurchmesser. Ein Wert von n = 1 bedeutet eine volle Federwindung und entspricht somit 360°. Die Windungsanzahl bezieht sich dabei auf den Federkörper ohne die abgebogenen Federenden.

Zwischen n = 0 und n = 1,5 ist der Windungsdurchmesser-Verlauf in dem Anfangsabschnitt 20, in dem ersten Übergangsabschnitt 22 und in dem zweiten Übergangsabschnitt 24 dargestellt. In dem Anfangsabschnitt 20 reduziert sich der Windungsdurchmesser Da über einen Bereich von einer halben Windung auf den zweiten, kleineren Windungsdurchmesser Damin. In dem ersten Übergangsabschnitt 22 bleibt der Windungsdurchmesser Da dann für eine halbe Windung auf dem zweiten, kleineren Windungsdurchmesser Damin. In dem zweiten Übergangsabschnitt 24 vergrößert sich der Windungsdurchmesser Da von dem zweiten, kleineren Windungsdurchmesser Damin über eine halbe Federwindung auf den ersten, größeren Windungsdurchmesser Damax.

Es ist hier gut erkennbar, dass ab n = 1,5 der Windungsdurchmesser Da jeweils für eine halbe Federwindung der erste, größere Windungsdurchmesser Damax ist (Abschnitt 26). Dann reduziert sich der Windungsdurchmesser Da über einen Bereich von einer halben Windung auf den zweiten, kleineren Windungsdurchmesser Damin (Abschnitt 28). Der Windungsdurchmesser Da bleibt dann für eine halbe Windung auf dem zweiten, kleineren Windungsdurchmesser Damin (Abschnitt 30). Nachfolgend vergrößert sich der Windungsdurchmesser Da von dem zweiten, kleineren Windungsdurchmesser Damin über eine halbe Federwindung wieder auf den ersten, größeren Windungsdurchmesser Damax (Abschnitt 32).

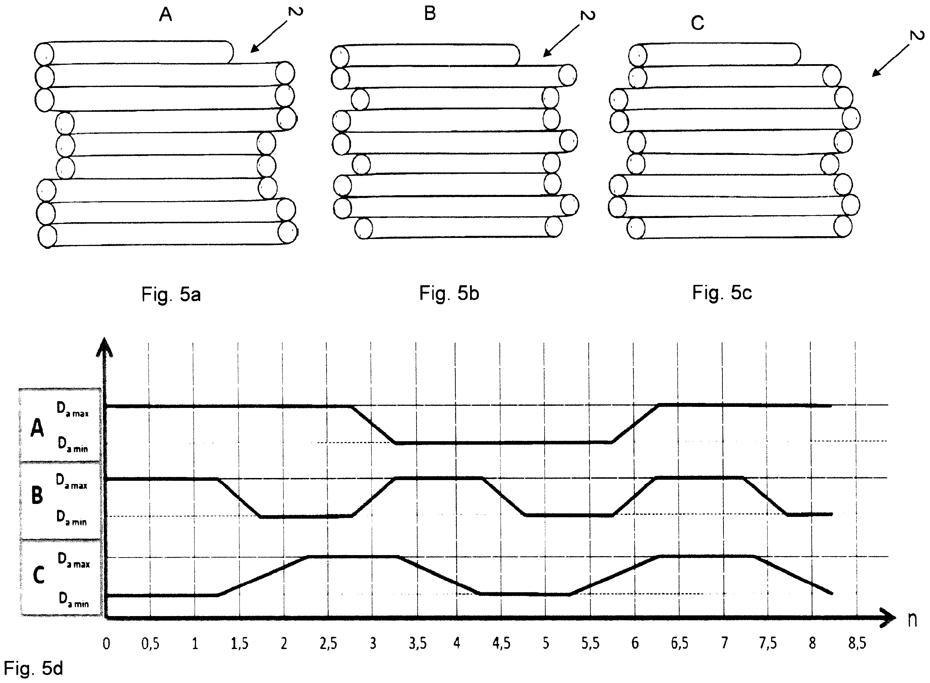

Fig. 5a zeigt die Drehfeder 2 gemäß einem zweiten Ausführungsbeispiel als schematische Schnittansicht, Fig. 5b zeigt die Drehfeder 2 gemäß einem dritten Ausführungsbeispiel als schematische Schnittansicht und Fig. 5c zeigt die Drehfeder 2 gemäß einem vierten Ausführungsbeispiel als schematische Schnittansicht.

Wie in Fig. 4 ist ein Durchmesserverlaufs-Diagramm (Fig. 5d) den Ausführungsbeispielen der Fig. 5a bis 5c zugeordnet, in dem der Verlauf der Windungsdurchmessers Da über die Anzahl n der Windungen 6 dergestellt ist. Dabei werden für die Ausführungsbeispiele der Fig. 5a bis Fig. 5c die Buchstaben A bis C zur Zuordnung des Verlaufs des Durchmessers Da über n verwendet. Entsprechend sind die Buchstaben A, B und C daher über den Fig. 5a, Fig. 5b und Fig. 5c angegeben.

Entsprechend der Kurve A in Fig. 5d zum zweiten Ausführungsbeispiel gemäß Fig. 5a ergibt sich folgender Verlauf des Durchmessers Da über die Windungen n: Der Durchmesser Da ist über 2,75 Windungen n der erste, größere Durchmesser Damax. Es schließt sich eine Windung n an, in der sich der Durchmesser Da auf den zweiten, kleineren Windungsdurchmesser Damin reduziert. Darauf folgen 2,5 Windungen, in denen der Durchmesser Da der zweite, kleinere Windungsdurchmesser Damin ist. Es schließt sich danach eine Windung n in der sich der Durchmesser Da von dem zweiten, kleineren Windungsdurchmesser Damin auf den ersten, größeren Durchmesser Damax vergrößert. Dieses Verlaufsmuster des Durchmessers Da setzt sich dann fort.

Entsprechend der Kurve B in Fig. 5d zum dritten Ausführungsbeispiel gemäß Fig. 5b ergibt sich folgender Verlauf des Durchmessers Da über die Windungen n: Der Durchmesser Da ist über 1,25 Windungen n der erste, größere Durchmesser Damax. Es schließt sich eine halbe Windung n an, in der sich der Durchmesser Da auf den zweiten, kleineren Windungsdurchmesser Damin reduziert. Darauf folgt eine Windung, in der der Durchmesser Da der zweite, kleinere Windungsdurchmesser Damin ist. Es schließt sich danach eine halbe Windung n an, in der sich der Durchmesser Da von dem zweiten, kleineren Windungsdurchmesser Damin auf den ersten, größeren Durchmesser Damax vergrößert. Anschließend ist der Durchmesser Da für eine Windung n der erste, größere Durchmesser Damax. Dieses Verlaufsmuster des Durchmessers Da setzt sich dann fort.

Entsprechend der Kurve C in Fig. 5d zum vierten Ausführungsbeispiel gemäß Fig. 5c ergibt sich folgender Verlauf des Durchmessers Da über die Windungen n: Zunächst ist der Durchmesser Da für 1,25 Windungen n der zweite, kleinere Windungsdurchmesser Damin. Es schließt sich danach eine Windung n an, in der sich der Durchmesser Da von dem zweiten, kleineren Windungsdurchmesser Damin auf den ersten, größeren Durchmesser Damax vergrößert. Anschließend ist der Durchmesser Da für eine Windung n der erste, größere Durchmesser Damax. Es schließt sich eine Windung n an, in der sich der Durchmesser Da auf den zweiten, kleineren Windungsdurchmesser Damin reduziert. Dieses Verlaufsmuster des Durchmessers Da setzt sich dann fort.

Fig. 6 zeigt die Drehfeder 2 gemäß dem ersten Ausführungsbeispiel in einer Draufsicht als schematische Darstellung mit Angabe von zwei Winkelstellungen W1, W2 des ersten Federdrahtendes 10.

Durch eine erste Drehkraft oder ein erstes Drehmoment zwischen dem ersten Federdrahtende 10 und dem zweiten Federdrahtende 16 wird das erste Federdrahtende 10 um den ersten Winkel W1 ausgelenkt.

Durch eine zweite Drehkraft oder ein zweites Drehmoment zwischen dem ersten Federdrahtende 10 und dem zweiten Federdrahtende 16 wird das erste Federdrahtende 10 um den zweiten Winkel W2 ausgelenkt.

Fig. 7 zeigt die Drehfeder 2 gemäß dem ersten Ausführungsbeispiel in einer Draufsicht und einem Schnitt A-A mit zwei Ausschnittsvergrößerungen für unterschiedliche Positionen des Federdrahtes 4 entsprechend zwei unterschiedlichen Winkelstellungen des ersten Federdrahtendes 10.

Dabei zeigt die obere Ausschnittvergrößerung einen Ausschnitt von drei Federwindungen 6, die in Axialrichtung einen Windungsabstand von Null, aber unterschiedliche Windungsdurchmesser haben. Dies stellt den unbelasteten Zustand der Drehfeder 2, also den Ruhezustand der Drehfeder 2 dar.

In der unteren Ausschnittvergrößerung ist die Drehfeder 2 in einem vorgespannten oder belasteten Zustand gezeigt, in dem eine Drehkraft oder ein Drehmoment auf die Federenden einwirkt. Dabei kommen die Federdrahtwindungen 6 in Axialrichtung und auch in Radialrichtung aneinander zum Anliegen. Insbesondere legen sich Federwindungen mit geringerem Durchmesser Da an benachbarte Federwindungen Da mit größerem Durchmesser Da an. Dadurch können sich die Federdrahtwindungen 6 aneinander abstützen, was die Dämpfung der Drehfeder 2 erhöht.

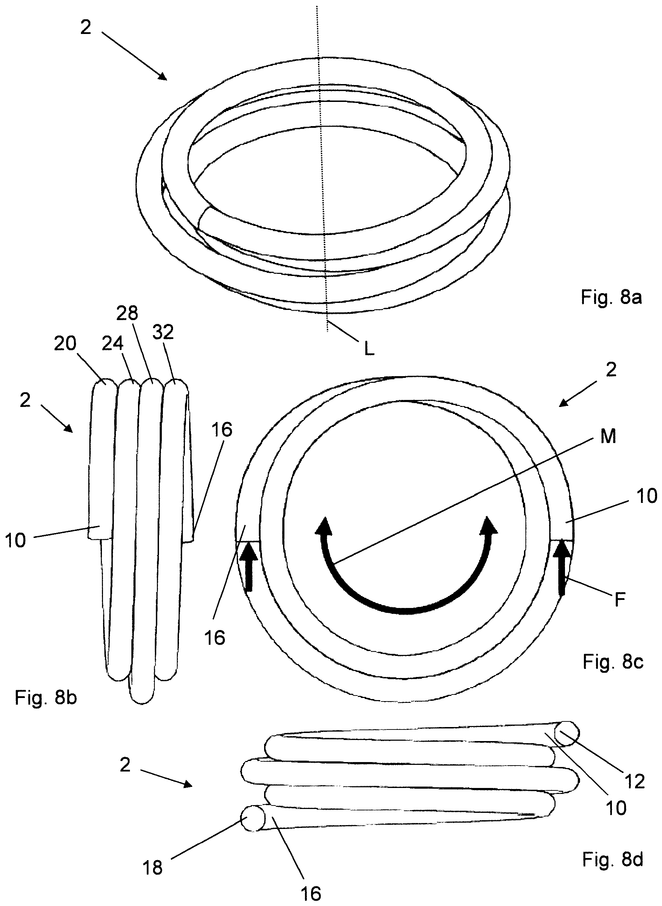

Fig. 8a bis 8d zeigen eine Drehfeder 2 gemäß einem fünften Ausführungsbeispiel als schematische perspektivische Darstellung (Fig. 8a), als Seitenansicht (Fig. 8b), als Draufsicht (Fig. 8c) und als Vorderansicht (Fig. 8d).

Die Drehfeder 2 gemäß dem fünften Ausführungsbeispiel unterscheidet sich von dem ersten Ausführungsbeispiel in der Ausgestaltung der Federdrahtenden 10, 16 und der Lastaufnahme durch die Federdrahtenden 10, 16. Die Drehfeder 2 der Figur 8 ist für eine öffnende Belastung ausgelegt. Die Einleitung der Drehkraft und des Drehmoments erfolgt über die Stirnflächen an den Federenden 10 und 16. Die Belastung der Drehfeder 2 erfolgt somit gegen die Wickelrichtung.

Das erste Federdrahtende 10 verläuft in Wickelrichtung der obersten Federdrahtwindung 8. Die erste Stirnfläche 12 ist dabei gemäß diesem Ausführungsbeispiel orthogonal zur Längserstreckungsrichtung des Federdrahtes 4 vorgesehen. Das zweite Federdrahtende 16 verläuft in Wickelrichtung der untersten Federdrahtwindung 14. Die zweite Stirnfläche 18 ist dabei gemäß diesem Ausführungsbeispiel ebenfalls orthogonal zur Längserstreckungsrichtung des Federdrahtes 4 vorgesehen.

Kräfte F lassen sich gemäß diesem Ausführungsbeispiel als Druckkräfte in die Stirnflächen 12, 18 des ersten bzw. zweiten Federdrahtendes 10, 16 einleiten, wodurch ein Drehmoment M an der Drehfeder 2 erzeugt wird. Beispielsweise können die Drehkräfte parallel zur Längserstreckungsrichtung des Federdrahtes 4 im Bereich der Federdrahtenden 10, 16 eingeleitet werden. Dadurch ergibt sich eine besonders kompakte Bauweise der Drehfeder 2 ohne radial weg ragende Federdrahtenden 10, 16.

Der Windungsdurchmesser-Verlauf entspricht dem mit Bezug auf die Drehfeder 2 in den Figuren 1 bis 4 gezeigten und beschriebenen Windungsdurchmesser-Verlauf.

### Bezugszeichenliste

2 Drehfeder
4 Federdraht
6 Federwindungen
8 oberste Federwindung
10 erstes Federdrahtende
12 erste Stirnfläche
14 unterste Federwindung
16 zweites Federdrahtende
18 zweite Stirnfläche
20 Anfangsabschnitt
22 erster Übergangsabschnitt
24 zweiter Übergangsabschnitt
26 erster Abschnitt
28 zweiter Abschnitt
30 dritter Abschnitt
32 vierter Abschnitt
A Schnittebenenpfeil
B Schnittebenenpfeil
d Federdrahtdurchmesser
Da Windungsdurchmesser
Damax erster, größerer Windungsdurchmesser
Damin zweiter, kleinerer Windungsdurchmesser
F Kraftpfeil
L Längsachse
M Drehmomentenpfeil
n Windungszahl
W Winkelbereich
W1 erster Winkel
W2 zweiter Winkel

## Patentansprüche

1. Drehfeder (2), aufweisend:
einen gewundenen Federdraht (4) mit mehreren Federwindungen (6); sowie ein erstes Federdrahtende (10) und ein zweites Federdrahtende (16);
wobei die Drehfeder (2) zur Aufnahme einer Drehkraft und/oder eines Drehmoments bei einer auf die Federdrahtenden (10, 16) einwirkenden Winkel-/ Drehbewegung ausgebildet ist;
wobei die Federwindungen (6) wenigstens einen Federwindungsbereich mit einem Windungsdurchmesser-Verlauf aufweisen,
mit einem ersten Abschnitt (26), in dem der Windungsdurchmesser (Da) entlang eines ersten Winkelbereichs ein erster, größerer Windungsdurchmesser (Damax) ist;
mit einem zweiten Abschnitt (28), in dem danach der Windungsdurchmesser (Da) entlang eines zweiten Winkelbereichs von dem ersten, größeren Windungsdurchmesser (Damax) zu einem zweiten, kleineren Windungsdurchmesser (Damin) abnimmt;
mit einem dritten Abschnitt (30), in dem danach der Windungsdurchmesser (Da) entlang eines dritten Winkelbereichs der zweite, kleinere Windungsdurchmesser (Damin) ist,
mit einem vierten Abschnitt (32), in dem danach der Windungsdurchmesser (Da) entlang eines vierten Winkelbereichs von dem zweiten, kleineren Windungsdurchmesser (Damin) zu dem ersten, größeren Windungsdurchmesser (Damax) zunimmt;
**dadurch gekennzeichnet, dass**
die Drehfeder (2) so ausgebildet ist, dass im ungespannten Zustand der Drehfeder (2) jeweils benachbarte Windungen (6) in einem axialen Abstand zueinander angeordnet sind; und dass im gespannten Zustand der Drehfeder (2) jeweils benachbarte Windungen (6) aneinander anliegen; und
durch das Anliegen von benachbarten Windungen (6) und durch die gegenseitige Abstützung der Federabschnitte das Dämpfungsverhalten der Drehfeder (2) verbessert wird.

2. Drehfeder (2) nach Anspruch 1, wobei der zweite, kleinere Windungsdurchmesser (Damin) um einen Betrag kleiner ist als der erste, größere Windungsdurchmesser (Damax), der höchstens das Dreifache des Federdrahtdurchmessers (d) beträgt.

3. Drehfeder (2) nach einem der vorhergehenden Ansprüche,
wobei der erste Abschnitt (26) des Windungsdurchmesser-Verlaufs des wenigstens einen Federwindungsbereichs, in dem der Windungsdurchmesser der erste, größere Windungsdurchmesser (Damax) ist, einen Winkelbereich von 90° bis 1800° einnimmt; und/oder
wobei der dritte Abschnitt (30) des Windungsdurchmesser-Verlaufs des wenigstens einen Federwindungsbereichs, in dem der Windungsdurchmesser der zweite, kleinere Windungsdurchmesser (Damin) ist, einen Winkelbereich von 90° bis 1800° einnimmt; und/oder
wobei der erste Abschnitt (26) und der dritte Abschnitt (30) des Windungsdurchmesser-Verlaufs jeweils gleich große Winkelbereiche einnehmen.

4. Drehfeder (2) nach einem der vorhergehenden Ansprüche,
wobei der zweite Abschnitt (28) des Windungsdurchmesser-Verlaufs des wenigstens einen Federwindungsbereichs, in dem der Windungsdurchmesser von dem ersten, größeren Windungsdurchmesser zu einem zweiten, kleineren Windungsdurchmesser abnimmt, einen Winkelbereich von 45° bis 360°, insbesondere etwa 180°, einnimmt; und/oder
wobei der vierte Abschnitt (32) des Windungsdurchmesser-Verlaufs des wenigstens einen Federwindungsbereichs, in dem der Windungsdurchmesser von dem zweiten, kleineren Windungsdurchmesser zu dem ersten, größeren Windungsdurchmesser zunimmt, einen Winkelbereich von 45° bis 360°, insbesondere etwa 180°, einnimmt; und/oder
wobei der zweite Abschnitt (28) und der vierte Abschnitt (32) des Windungsdurchmesser-Verlaufs jeweils gleich große Winkelbereiche einnehmen.

5. Drehfeder (2) nach einem der vorhergehenden Ansprüche,
wobei die Federwindungen (6) mehrere Federwindungsbereiche hintereinander aufweisen, die jeweils einen Windungsdurchmesser-Verlauf aufweisen,
mit einem ersten Abschnitt (26), in dem der Windungsdurchmesser (Da) entlang eines ersten Winkelbereichs ein erster, größerer Windungsdurchmesser ist;
mit einem zweiten Abschnitt (28), in dem danach der Windungsdurchmesser (Da) entlang eines zweiten Winkelbereichs von dem ersten, größeren Windungsdurchmesser (Damax) zu einem zweiten, kleineren Windungsdurchmesser (Damin) abnimmt;
mit einem dritten Abschnitt (30), in dem danach der Windungsdurchmesser (Da) entlang eines dritten Winkelbereichs der zweite, kleinere Windungsdurchmesser (Damin) ist,
mit einem vierten Abschnitt (32), in dem danach der Windungsdurchmesser (Da) entlang eines vierten Winkelbereichs von dem zweiten, kleineren Windungsdurchmesser (Damin) zu dem ersten, größeren Windungsdurchmesser (Damax) zunimmt.
wobei Abschnitte jeweils benachbarter Federwindungen (6), in denen der Windungsdurchmesser (Da) vom zweiten, kleineren Windungsdurchmesser (Damin) zum ersten, größeren Windungsdurchmesser (Damax) übergeht, aneinander anliegen und/oder
Abschnitte jeweils benachbarter Federwindungen (6), in denen der Windungsdurchmesser (Da) vom ersten, größeren Windungsdurchmesser (Damax) zum zweiten, kleineren Windungsdurchmesser (Damin) übergeht, aneinander anliegen.

6. Drehfeder (2) nach einem der vorhergehenden Ansprüche, wobei vor dem ersten Federwindungsbereich ein Anfangsabschnitt, in dem der Windungsdurchmesser (Da) entlang eines Winkelbereichs der zweite, kleinere Windungsdurchmesser (Damin) ist, und ein Übergangsabschnitt vorgesehen sind, in dem danach der Windungsdurchmesser (Da) entlang eines Winkelbereichs von dem zweiten, kleineren Windungsdurchmesser (Damin) zu dem ersten, größeren Windungsdurchmesser (Damax) zunimmt; und wobei der erste Abschnitt (26) des ersten Federwindungsbereichs an den Übergangsabschnitt anschließt.

7. Drehfeder (2) nach einem der Ansprüche 1 bis 5, wobei vor dem ersten Federwindungsbereich ein Anfangsabschnitt vorgesehen ist, in dem der Windungsdurchmesser entlang eines Winkelbereichs von dem zweiten, kleineren Windungsdurchmesser (Damin) zu dem ersten, größeren Windungsdurchmesser (Damax) zunimmt; und wobei der erste Abschnitt (26) des ersten Federwindungsbereichs an den Anfangsabschnitt anschließt.

8. Drehfeder (2) nach einem der Ansprüche 1 bis 5, wobei vor dem ersten Federwindungsbereich ein Anfangsabschnitt (20), in dem der Windungsdurchmesser entlang eines Winkelbereichs von dem ersten, größeren Windungsdurchmesser (Damax) zu einem zweiten, kleineren Windungsdurchmesser (Damin) abnimmt, ein erster Übergangsabschnitt (22), in dem der Windungsdurchmesser (Da) entlang eines Winkelbereichs der zweite, kleinere Windungsdurchmesser (Damin) ist, und ein zweiter Übergangsabschnitt (24) vorgesehen sind, in dem danach der Windungsdurchmesser (Da) entlang eines Winkelbereichs von dem zweiten, kleineren Windungsdurchmesser (Damin) zu dem ersten, größeren Windungsdurchmesser (Damax) zunimmt; und wobei der erste Abschnitt (26) des ersten Federwindungsbereichs an den zweiten Übergangsabschnitt (24) anschließt.

9. Drehfeder (2) nach einem der vorhergehenden Ansprüche,
wobei die Drehfeder (2) für eine schließende Belastung in Wickelrichtung ausgebildet ist; und/oder
wobei das erste Federdrahtende (10) als von der obersten Federwindung (8) weg gebogenes, insbesondere nach außen gebogenes Federdrahtende ausgebildet ist; und/oder
wobei das zweite Federdrahtende (16) als von der untersten Federwindung (14) weg gebogenes, insbesondere nach außen gebogenes Federdrahtende ausgebildet ist.

10. Drehfeder (2) nach einem der Ansprüche 1 bis 8,
wobei die Drehfeder (2) für eine öffnende Belastung gegen die Wickelrichtung ausgebildet ist; und/oder
wobei das erste Federdrahtende (10) eine erste, sich insbesondere in Wickelrichtung erstreckende Stirnfläche (12) aufweist; und
wobei das zweite Federdrahtende (16) eine zweite, sich insbesondere in Wickelrichtung erstreckende Stirnfläche (18) aufweist;
wobei die erste und die zweite Stirnfläche (12, 18) zur Einleitung der Drehkraft und/oder des Drehmoments bei einer auf die Federdrahtenden (10, 16) einwirkenden Winkel-/Drehbewegung ausgebildet sind.

11. Drehfeder (2) nach einem der vorhergehenden Ansprüche, wobei das erste Federdrahtende (10) und das zweite Federdrahtende (16) im ungespannten Zustand der Drehfeder (2) einen Spannwinkel in Umfangsrichtung der Drehfeder (2) einschließen.

12. Drehfeder (2) nach einem der vorhergehenden Ansprüche, wobei der Federdraht (4) einen runden, einen ovalen, einen rechteckigen, einen elliptischen oder einen Multi-Arc-Querschnitt aufweist.

## Claims

1. A torsion spring (2), comprising:
a wound spring wire (4) with a plurality of spring windings (6); and
a first spring wire end (10) and a second spring wire end (16);
wherein the torsion spring (2) is designed for taking up a rotary force and/or a torque when an angular/rotary movement acts on the spring wire ends (10, 16),
wherein the spring windings (6) have at least one spring winding portion having a course of a winding diameter,
with a first section (26) in which the winding diameter (Da) along a first angular range is a first, larger winding diameter (Damax);
with a second section (28) in which the winding diameter (Da) thereafter decreases along a second angular range from said first, larger winding diameter (Damax) to a second, smaller diameter (Damin);
with a third section (30) in which the winding diameter (Da) thereafter along a third angular range is the second, smaller winding diameter (Damin),
with a fourth section (32) in which the winding diameter (Da) thereafter increases along a fourth angular range from the second, smaller winding diameter (Damin) to the first, larger winding diameter (Damax);
**characterized in that**
the torsion spring (2) is designed such that, in the unstressed state of the torsion spring (2), respective adjacent windings (6) are arranged in axially spaced apart manner; and
that, in the stressed state of the torsion spring (2), respective adjacent windings (6) abut one another; and
that the damping behavior of the torsion spring (2) is enhanced by the abutting of adjacent windings (6) and by the mutual support of the spring sections.

2. The torsion spring (2) according to claim 1,
wherein the second, smaller winding diameter (Damin) is smaller than the first, larger winding diameter (Damax) by an amount which is at most three times the spring wire diameter (d).

3. The torsion spring (2) according to any of the preceding claims,
wherein the first section (26) of the course of the winding diameter of the at least one spring winding portion in which the winding diameter is the first, larger winding diameter (Damax), occupies an angular range of 90° to 1800°; and/or
wherein the third section (30) of the course of the winding diameter of the at least one spring winding portion in which the winding diameter is the second, smaller winding diameter (Damin), occupies an angular range of 90° to 1800°; and/or
wherein the first section (26) and the third section (30) of the course of the winding diameter each occupy angular ranges of the same size.

4. The torsion spring (2) according to any of the preceding claims,
wherein the second section (28) of the course of the winding diameter of the at least one spring winding portion in which the winding diameter decreases from the first, larger winding diameter to a second, smaller winding diameter, occupies an angular range of 45° to 360°, in particular approximately 180°; and/or
wherein the fourth section (32) of the course of the winding diameter of the at least one spring winding portion in which the winding diameter increases from the second, smaller winding diameter to the first, larger winding diameter, occupies an angular range of 45° to 360°, in particular approximately 180°; and/or
wherein the second section (28) and the fourth section (32) of the course of the winding diameter each occupy angular ranges of the same size.

5. The torsion spring (2) according to any of the preceding claims,
wherein the spring windings (6) have several spring winding portions one behind the other, each thereof having a course of a winding diameter, with a first section (26) in which the winding diameter (Da) along a first angular range is a first, larger winding diameter;
with a second section (28) in which the winding diameter (Da) thereafter decreases along a second angular range from the first, larger winding diameter (Damax) to a second, smaller winding diameter (Damin);
with a third section (30) in which the winding diameter (Da) thereafter along a third angular range is the second, smaller winding diameter (Damin), with a fourth section (32) in which the winding diameter (Da) thereafter increases along a fourth angular range from the second, smaller winding diameter (Damin) to the first, larger winding diameter (Damax),
wherein sections of respective adjacent spring windings (6) in which the winding diameter (Da) transitions from the second, smaller winding diameter (Damin) to the first, larger winding diameter (Damax), abut one another, and/or
sections of respective adjacent spring windings (6) in which the winding diameter (Da) transitions from the first, larger winding diameter (Damax) to the second, smaller winding diameter (Damin), abut one another.

6. The torsion spring (2) according to any of the preceding claims,
wherein before the first spring winding portion, there are provided an initial section in which the winding diameter (Da) along an angular range is the second, smaller winding diameter (Damin), and a transition section in which the winding diameter (Da) thereafter increases along an angular range from the second, smaller winding diameter (Damin) to the first, larger winding diameter (Damax); and wherein the first section (26) of the first spring winding portion is contiguous with the transition section.

7. The torsion spring (2) according to any of claims 1 to 5,
wherein before the first spring winding portion, there is provided an initial section in which the winding diameter increases along an angular range from the second, smaller winding diameter (Damin) to the first, larger winding diameter (Damax); and wherein the first section (26) of the first spring winding portion is contiguous with the initial section.

8. The torsion spring (2) according to any of claims 1 to 5,
wherein before the first spring winding portion, there are provided an initial section (20) in which the winding diameter decreases along an angular range from the first, larger winding diameter (Damax) to a second, smaller winding diameter (Damin), a first transition section (22) in which the winding diameter (Da) along an angular range is the second, smaller winding diameter (Damin), and a second transition section (24) in which thereafter the winding diameter (Da) increases along an angular range from the second, smaller winding diameter (Damin) to the first, larger winding diameter (Damax); and wherein the first section (26) of the first spring winding portion is contiguous with the second transition section (24).

9. The torsion spring (2) according to any of the preceding claims,
wherein the torsion spring (2) is designed for a closing load in the winding direction; and/or
wherein the first spring wire end (10) is designed as a spring wire end bent away from the uppermost spring winding (8), in particular bent outwards; and/or
wherein the second spring wire end (16) is designed as a spring wire end bent away from the lowermost spring winding (14), in particular bent outwards.

10. The torsion spring (2) according to any of Claims 1 to 8,
wherein the torsion spring (2) is designed for an opening load against the winding direction; and/or
wherein the first spring wire end (10) has a first end face (12) extending in particular in the winding direction; and
wherein the second spring wire end (16) has a second end face (18) extending in particular in the winding direction;
wherein the first and second end faces (12, 18) are designed to introduce the rotary force and/or the torque when an angular/rotary movement acts on the spring wire ends (10, 16).

11. The torsion spring (2) according to any of the preceding claims,
wherein the first spring wire end (10) and the second spring wire end (16) include a tensioning angle in the circumferential direction of the torsion spring (2) in the unstressed state of the torsion spring (2).

12. The torsion spring (2) according to any of the preceding claims,
wherein the spring wire (4) has a round, oval, rectangular, elliptical or multi-arc cross-section.

## Revendications

1. Ressort de torsion (2), présentant :
un fil à ressort enroulé (4) avec plusieurs spires (6) ; ainsi que
une première extrémité de fil à ressort (10) et une deuxième extrémité de fil à ressort (16) ;
le ressort de torsion (2) étant réalisé de manière à accepter une force de rotation et/ou un couple de rotation lors d'un mouvement angulaire/rotatif exercé sur les extrémités du fil à ressort (10, 16) ;
les spires (6) présentant au moins une zone de spire avec une évolution du diamètre d'enroulement,
avec une première section (26) où le diamètre d'enroulement (Da), le long d'une première plage angulaire, est un premier diamètre d'enroulement plus grand (Damax) ;
avec une deuxième section (28) où le diamètre d'enroulement (Da), le long d'une deuxième plage angulaire, diminue ensuite, passant du premier diamètre d'enroulement plus grand (Damax) à un deuxième diamètre d'enroulement plus petit (Damin) ;
avec une troisième section (30) où le diamètre d'enroulement (Da), le long d'une troisième plage angulaire, est ensuite le deuxième diamètre d'enroulement plus petit (Damin) ;
avec une quatrième section (32) où le diamètre d'enroulement (Da), le long d'une quatrième plage angulaire, augmente ensuite, passant du deuxième diamètre d'enroulement plus petit (Damin) au premier diamètre d'enroulement plus grand (Damax) ;
**caractérisé en ce que**
le ressort de torsion (2) est réalisé de telle sorte que, à l'état non tendu du ressort de torsion (2), les spires (6) voisines respectivement sont agencées l'une par rapport à l'autre selon une distance axiale ; et que, à l'état tendu du ressort de torsion (2), les spires (6) voisines respectivement sont en contact l'une avec l'autre ; et
par le contact de spires (6) voisines et par l'appui réciproque des sections de ressort, les caractéristiques d'amortissement du ressort de torsion (2) sont améliorées.

2. Le ressort de torsion (2) selon la revendication 1, dans lequel le deuxième diamètre d'enroulement plus petit (Damin) et inférieur au premier diamètre d'enroulement plus grand (Damax) selon une valeur qui est au maximum le triple du diamètre du fil à ressort (d).

3. Le ressort de torsion (2) selon l'une quelconque des revendications précédentes,
dans lequel la première section (26) de l'évolution du diamètre d'enroulement de la zone de spire, une au moins, où le diamètre d'enroulement est le premier diamètre d'enroulement plus grand (Damax), adopte une plage angulaire de 90° à 1800° ; et/ou
dans lequel la troisième section (30) de l'évolution du diamètre d'enroulement de la zone de spire, une au moins, où le diamètre d'enroulement est le deuxième diamètre d'enroulement plus petit (Damin), adopte une plage angulaire de 90° à 1800° ; et/ou
dans lequel la première section (26) et la troisième section (30) de l'évolution du diamètre d'enroulement adoptent chacune des plages angulaires de même taille.

4. Le ressort de torsion (2) selon l'une quelconque des revendications précédentes,
dans lequel la deuxième section (28) de l'évolution du diamètre d'enroulement de la zone de spire, une au moins, où le diamètre d'enroulement diminue, passant du premier diamètre d'enroulement plus grand à un deuxième diamètre d'enroulement plus petit, adopte une plage angulaire de 45° à 360°, en particulier environ 180° ; et/ou
dans lequel la quatrième section (32) de l'évolution du diamètre d'enroulement de la zone de spire, une au moins, où le diamètre d'enroulement augmente, passant du deuxième diamètre d'enroulement plus petit au premier diamètre d'enroulement plus grand adopte une plage angulaire de 45° à 360°, en particulier environ 180° ; et/ou
dans lequel la deuxième section (28) et la quatrième section (32) de l'évolution du diamètre d'enroulement adoptent chacune les mêmes plages angulaires.

5. Le ressort de torsion (2) selon l'une quelconque des revendications précédentes,
dans lequel les spires (6) présentent plusieurs zones de spire les unes après les autres, qui présentent chacune une évolution du diamètre d'enroulement,
avec une première section (26) où le diamètre d'enroulement (Da), le long d'une première plage angulaire, est un premier diamètre d'enroulement plus grand ;
avec une deuxième section (28) où le diamètre d'enroulement (Da), le long d'une deuxième plage angulaire, diminue ensuite, passant du premier diamètre d'enroulement plus grand (Damax) à un deuxième diamètre d'enroulement plus petit (Damin) ;
avec une troisième section (30) où le diamètre d'enroulement (Da), le long d'une troisième plage angulaire, est ensuite le deuxième diamètre d'enroulement plus petit (Damin) ;
avec une quatrième section (32) où le diamètre d'enroulement (Da), le long d'une quatrième plage angulaire, augmente ensuite, passant du deuxième diamètre d'enroulement plus petit (Damin) au premier diamètre d'enroulement plus grand (Damax) ;
dans lequel les sections de spires (6) voisines où le diamètre d'enroulement (Da) passe du deuxième diamètre d'enroulement plus petit (Damin) au premier diamètre d'enroulement plus grand (Damax) sont en contact l'une avec l'autre et/ou
les sections de spires (6) voisines où le diamètre d'enroulement (Da) passe du premier diamètre d'enroulement plus grand (Damax) au deuxième diamètre d'enroulement plus petit (Damin) sont en contact l'une avec l'autre.

6. Le ressort de torsion (2) selon l'une quelconque des revendications précédentes, dans lequel, avant la première zone de spire, sont prévues une section initiale où le diamètre d'enroulement (Da), le long d'une plage angulaire, est le deuxième diamètre d'enroulement plus petit (Damin), et une section de transition où le diamètre d'enroulement (Da), le long d'une plage angulaire, augmente, passant du deuxième diamètre d'enroulement plus petit (Damin) au premier diamètre d'enroulement plus grand (Damax) ; et où la première section (26) de la première zone de spire fait suite à la section de transition.

7. Le ressort de torsion (2) selon l'une quelconque des revendications 1 à 5, dans lequel, avant la première zone de spire, est prévue une section initiale où le diamètre d'enroulement, le long d'une plage angulaire, augmente, passant du deuxième diamètre d'enroulement plus petit (Damin) au premier diamètre d'enroulement plus grand (Damax) ; et dans lequel la première section (26) de la première zone de spire fait suite à la section initiale.

8. Le ressort de torsion (2) selon l'une quelconque des revendications 1 à 5, dans lequel, avant la première zone de spire, sont prévues une section initiale (20) où le diamètre d'enroulement, le long d'une plage angulaire, diminue, passant du premier diamètre d'enroulement plus grand (Damax) à un deuxième diamètre d'enroulement plus petit (Damin), une première section de transition (22) où le diamètre d'enroulement (Da), le long d'une plage angulaire, est le deuxième diamètre d'enroulement plus petit (Damin) et une deuxième section de transition (24) où le diamètre d'enroulement (Da), le long d'une plage angulaire, augmente, passant du deuxième diamètre d'enroulement plus petit (Damin) au premier diamètre d'enroulement plus grand (Damax) ; et dans lequel la première section (26) de la première zone de spire fait suite à la deuxième section de transition (24).

9. Le ressort de torsion (2) selon l'une quelconque des revendications précédentes, dans lequel le ressort de torsion (2) est réalisé pour une charge de fermeture dans le sens d'enroulement ; et/ou
dans lequel la première extrémité du fil à ressort (10) est réalisée de manière incurvée dans un sens s'éloignant de la spire supérieure (8), en particulier incurvée vers l'extérieur ; et/ou
dans lequel la deuxième extrémité du fil à ressort (16) est réalisée de manière incurvée dans un sens s'éloignant de la spire inférieure (14), en particulier incurvée vers l'extérieur.

10. Le ressort de torsion (2) selon l'une quelconque des revendications 1 à 8,
dans lequel le ressort de torsion (2) est réalisé pour une charge d'ouverture contre le sens d'enroulement ; et/ou
dans lequel la première extrémité du fil à ressort (10) présente une première surface frontale (12) s'étendant particulièrement dans le sens d'enroulement ; et
dans lequel la deuxième extrémité du fil à ressort (16) présente une deuxième surface frontale (18) s'étendant particulièrement dans le sens d'enroulement ;
dans lequel la première et la deuxième surfaces frontales (12, 18) sont réalisées de manière à initier la force de rotation et/ou le couple lors d'un mouvement angulaire/rotatif agissant sur les extrémités du fil à ressort (10, 16).

11. Le ressort de torsion (2) selon l'une quelconque des revendications précédentes, dans lequel la première extrémité du fil à ressort (10) et la deuxième extrémité du fil à ressort (16), à l'état non tendu du ressort de torsion (2), incluent un angle de tension dans la direction circonférentielle du ressort de torsion (2).

12. Le ressort de torsion (2) selon l'une quelconque des revendications précédentes, dans lequel le fil à ressort (4) présente une section transversale ronde, ovale, rectangulaire, elliptique ou multi-arc.
